# EUROPÄISCHE PATENTANMELDUNG

(11) **EP 2 154 510 A2**
(43) Veröffentlichungstag der Anmeldung: **17.02.2010**
(21) Anmeldenummer: 09009196.8
(22) Anmeldetag: 15.07.2009
(51) Int. Cl.: G01N 11/14

(54) **Rheologische Einrichtung**

(30) Priorität: 16.08.2008 DE 102008038046
(71) Anmelder: KSB Aktiengesellschaft, 67227 Frankenthal (DE)
(72) Erfinder: Hellmann, Dieter-Heinz, 67661 Kaiserlautern/Dansenberg (DE); Urban, Lutz, 76669 Bad Schönborn (DE)

(57) **Zusammenfassung**

Die Erfindung betrifft eine Einrichtung und ein Verfahren zu einer rheologischen Messung eines Fluids, bestehend aus einem von einem Motor (3) angetriebenen Rührelement (1), dessen Motor (3) mit einer Leistungsmesseinrichtung verbunden ist, wobei die Einrichtung in Behälter (11.) zur Aufnahme zu untersuchender Fluide angeordnet ist. Das Rührelement (1) ist als ein axialfördernder Propeller- oder Schrägblattrührer mit bekannten Eigenschaften ausgebildet und mit einem drehzahlgeregelten Motor (3) antreibend verbunden. Der Motor (3) und/oder das Rührelement (1) sind mit einer 1. Messeinrichtung (4) für Drehzahl-, Drehmomenterfassung und mit einer 2. Messeinrichtung (5) zur Schubmessung verbunden und die Messeinrichtungen (4, 5) sind mit einer die Messergebnisse in eine Fließkurve oder entsprechende rheologische Werte umwandelnde Auswerteeinheit (14) verbunden (Figur 1).

## Beschreibung

Die Erfindung betrifft eine Einrichtung zu einer rheologischen Messung eines Fluids, bestehend aus einem von einem Motor angetriebenes Rührelement, dessen Motor mit einer Leistungsmesseinrichtung verbunden ist, wobei die Einrichtung in Behälter zur Aufnahme zu untersuchender Fluide angeordnet ist.

Die Auslegung eines Gerätes für einen Rühr- oder Mischvorgang bedingt die Beantwortung komplexer Fragen, da bei einem Mischvorgang zwischen einem turbulenten und laminaren Mischen unterschieden wird. Weiter ist zu beachten, ob es sich um niederviskose oder hochviskose Fluide handelt, da eine wichtige Eigenschaft deren rheologisches Verhalten ist. Und es wird unterschieden zwischen newtonschen Flüssigkeiten, deren Viskosität nur von der Temperatur abhängig ist, und nicht-newtonschen Flüssigkeiten, deren Viskosität sich mit einer auftretenden Schergeschwindigkeit und über die Zeit verändert. Die rheologischen Eigenschaften sind ursächlich für das Verhalten eines Fluids am Ort eines Rührvorganges. Hierzu gibt es verschiedene wissenschaftliche Veröffentlichungen, in denen die Bewegungsabläufe gerührter Fluide dargelegt sind. Da nicht-newtonsche Fluide in vielen Technikbereichen Verwendung finden, beispielhaft im industriellem Bereich, der Klärwerkstechnik, Abwassertechnik, Biotechnologie oder im chemischen Bereich, ist es ein generelles Problem festzustellen, welche Auswirkung ein von einem Rührelement erzeugter Fluidstrom innerhalb eines Fluids hat.

Weiter ist für die Auslegung von Rührsystemen eine Leistungsberechnung notwendig, um zuverlässige Aussagen im Rahmen einer Planung zu erhalten. Für in nicht-newtonsche Fluide einzusetzende Rührelemente ist es deshalb unabdingbar, die am Rührelement effektiv wirksame Scherrate zu kennen. Zur Ermittlung der effektiven Scherrate ist das RIEGER-NOVAK-Verfahren bekannt. Dabei wird in einem Standard-Rührkessel mit einem darin angeordneten und motorisch angetriebenen Rührelement an einer Probe eines zu untersuchenden Fluids die Antriebsleistung ermittelt. Die Darstellung der Antriebsleistung als Funktion der Reynolds-Zahl wird als Leistungscharakteristik bezeichnet. Die Reynolds-Zahl wird dargestellt als Funktion von Durchmesser und Drehzahl eines Rührelements, sowie von Dichte und Viskosität eines Fluids. Die Leistungscharakteristik wird in üblicher Weise mit einem oder mehreren newtonschen Fluiden bekannter Viskosität bestimmt. Das RIEGER-NOVAK-Verfahren sieht weiter eine Messung desselben Rührsystems mit einem nicht-newtonschen Fluid bekannter Fließkurve vor. Aus dieser Messung sowie der Leistungscharakteristik ergibt sich der Zusammenhang aus Drehzahl und Scherrate für dieses untersuchte Rührsystem. Nachteilig hierbei sind die Füllung und Leerung des Behälters sowie die anschließende Reinigung und der Transport und die Entsorgung eines zu untersuchenden Schlammes, der beispielsweise aus einer Kläranlage stammen kann.

Durch die DE 36 11 218 C2 ist ein Schlamm-Viskosimeter bekannt, bei dem mit Hilfe eines ringförmig geschlossenen Strömungsweges, einer Umwälzeinrichtung und einem Schwingstab-Sensor eine Messung der scheinbaren Viskosität von Schlämmen erfolgt. Die Schwingungsamplitude des Stabes wird zur Viskosität des Schlammes in Beziehung gebracht.

Eine andere Möglichkeit ist durch die DE 42 36 407 C2 bekannt, wobei mit Hilfe von Kapillaren und der Bestimmung des Volumenstromes einer Umwälzpumpe eine Viskositätsbestimmung vorgenommen wird. Dies funktioniert jedoch nur mit reinen Fluiden, die die Kapillaren nicht verstopfen können.

Durch die EP 0 967 475 B1 ist ein Verfahren zur Bestimmung der Viskosität einer Flüssigkeit, z. B. von Blut, bekannt, die von einer Pumpe gefördert wird, welche Pumpe einen Rotor zur Förderung der Flüssigkeit vom Einlass der Pumpe zum Auslass aufweist, wobei der Rotor zur Bestimmung der Viskosität herangezogen wird. Zur Bestimmung der Viskosität der Fluid erfolgt keine aktive Anregung des Rotors zur axialen Auslenkung aus seiner Betriebsposition. Stattdessen wird der Rotor in seiner Betriebsposition belassen und die Viskosität wird aus einem funktionellen, messtechnisch erfassten Zusammenhang zwischen der Viskosität und den Messgrößen der Pumpe bzw. des Rotors bestimmt. Hierzu werden der Antriebsstrom des Rotors und/oder die Rotordrehzahl gemessen und aus den Werten für das Antriebsmoment bzw. Antriebsstrom und/oder Rotordrehzahl wird die Viskosität des Fluids bestimmt. Dazu ist es notwendig, dass vor der Bestimmung der Viskosität mit Hilfe der Messgrößen der Pumpenauslass geschlossen wird. Somit wird eine Art von Kalibrierung erreicht, da die Pumpe gegen einen geschlossenen Auslass betrieben wird und damit deren Grunddaten erfassbar sind. Ein solches Verfahren ist bei den Blutpumpen von Herz-Lungen-Maschinen infolge der bekannten Eigenschaften des Blutes und des zugehörigen Rohrnetzes relativ einfach möglich. Dieses Verfahren ist jedoch nicht einsetzbar für nicht-newtonsche Fluide unbekannter Zusammensetzung und unbekannten Schädigungspotential, wie dies beispielsweise in Klär- oder Abwasserwerken der Fall ist.

Durch die W0 97/24596 A1 sind ein Verfahren und ein Apparat zur Bestimmung der physikalischen Variablen von Schlämmen oder breiige, wässrigen Massen bekannt. Mit einer Kreiselpumpe werden verschiedene Messreihen durchfahren und zumindest zwei der Werte von der zur Förderung aufgewandten Leistung, die Durchflussrate, die Drehzahl der Pumpe oder die Fördermenge der Pumpe sowie der Wirkungsgrad der Pumpe erfasst. Diese Daten werden verglichen mit gespeicherten früheren Vergleichsdaten, um daraus mit Hilfe weiterer Schritte die physikalischen Variablen der Flüssigkeit berechnen zu können. Auch dieses Prinzip funktioniert nur in einem geschlossenen Rohrleitungssystem.

Das rheologische Verhalten eines Fluid übt einen starken Einfluss auf die Kenndaten eines Rührelementes aus. Beispielsweise ist die Rheologie eines Schlammes in der Praxis nur in seltenen Einzelfällen genau bekannt. So gründet die Auslegung eines Rührwerks für einen klärtechnischen Mischprozess vorrangig auf einer erfahrungsbasierten Aufwertung eines geschätzten beckenseitigen Schubbedarfs in Abhängigkeit von einem prognostizierten Trockensubstanzgehalt. Gerade bei Schlämmen mit Beimengungen in Form von gröberen Feststoffen, wie sie beispielsweise im Bereich der Biogasanlagen vorkommen, versagen die bekannten Verfahren zur Viskositätsbestimmung. So ist es beispielsweise nicht möglich, mit bekannten Mitteln die rheologischen Eigenschaften von Gülle oder Haushaltsabwässern zu bestimmen, da diese Fluide mit Beimengungen unterschiedlichsten Härtegrades versehen sind.

Der Erfindung liegt das Problem zugrunde, für ein Fluid mit unbekannten rheologischen Eigenschaften, die infolge von Inhomogenitäten nach Art von groben und/oder pastösen Beimengungen zusätzlich verändert werden, eine zuverlässige Möglichkeit zu entwickeln, um dessen rheologische Parameter zu erfassen.

Die Lösung dieses Problems sieht eine Einrichtung vor, wobei das Rührelement als ein axialfördernder Propeller- oder Schrägblattrührer mit bekannten Eigenschaften ausgebildet und mit einem drehzahlgeregelten Motor antreibend verbunden ist, dass der Motor und/oder das Rührelement mit einer 1. Messeinrichtung für Drehzahl- und Drehmomenterfassung und mit einer 2. Messeinrichtung zur Schubmessung verbunden sind und dass die Messeinrichtungen mit einer die Messergebnisse in eine Fließkurve oder entsprechende rheologische Werte umwandelnde Auswerteeinheit verbunden sind.

Infolge des im Behälter befindlichen Fluids unbekannter Zusammensetzung und der Schubkraft des Rührelementes hat der davon abströmende Fluidstrahl nur eine endliche axiale Erstreckung. Der Fluidstrahl generiert einen Axialschub und übt damit auf eine antreibende Welle eine Kraft aus, die gemessen und registriert wird. Bei dieser Lösung wird in verschiedenen Fluiden unterschiedlicher, aber bekannter physikalischer Eigenschaft die Schubkraft des Rührelementes ermittelt und gespeichert. Aus diesem Grunde wird erst die charakteristische Leistungs- und Schubkurve mit einem newtonschem Fluid mit mehreren aber konstanten Viskositäten µ₁, µ₂ und µ₃ bis µₓ bestimmt. Im Anschluss daran wird ein bekanntes, aber nicht-newtonsches Fluid gemessen, wodurch sich der Zusammenhang aus Drehzahl und Scherrate ergibt. Mit diesem Zusammenhang und mit der vorher gemessenen Leistungs- und Schubcharakteristik im newtonschen Fluid sind dann durch die Drehmoment-, Drehzahl- und Schuberfassung des Rührelementes und den Vergleich mit den hinterlegten bekannten Werten Fließkurven und daraus die Viskosität unbekannter Fluide messbar.

Somit sind genaue Aussagen über die Leistung des Rührelementes in einem unbekannten Fluid möglich. Soll beispielsweise die Wirkung eines Rührelementes in einem Klärbecken bestimmt werden, dessen Fluid von seiner Zusammensetzung her keinen einheitlichen Vorgaben entspricht, dann wird dessen Fließkurve über das zur Rotation des Rührelementes notwendige Drehmoment und aufgrund der vom Rührelement erzeugten Schubkraft ermittelt. Mit der so möglichen Bestimmung der Fließkurve ist eine sichere Auslegung der einen Klärbeckeninhalt in Rotation setzenden Bauteile zuverlässig möglich.

Eine Ausgestaltung sieht vor, dass die Einrichtung als eine transportable Einheit ausgestaltet ist. Somit ist das Rührelement und die Einrichtung einfach in ein in einem Behälter zur Untersuchung oder Behandlung befindliches Fluid einzubringen.

Als vorteilhaft hat sich erwiesen, dass die Einrichtung mit Auftriebskörpern schwimmfähig ausgebildet ist. Somit kann sie in einem jeweiligen Bedarfsfall einfach auf der Oberfläche von einem mit Fluid gefülltem Behälter für Messzwecke abgesetzt werden. Auch kann die Einrichtung mit Hilfe von Hebemitteln für Messzwecke in ein zu untersuchendes Fluid gehalten werden. Die Untersuchung eines unbekannten Fluid erfolgt in vorteilhafter Weise an dessen Lagerort. Dazu kann eine Messung der Fließkurve innerhalb eines Behälters, wobei es sich um ein Becken eines Klärwerkes, Rückhaltebecken oder andere Behälter mit beliebigen Größen und Abmessungen handeln kann, erfolgen. Die Einrichtung wird so in einem Behälter angeordnet, dass das Rührelement in einer vorzugebenden Eintauchtiefe des Behälters befindlich ist, um somit während der Messungen reproduzierbare Werte zu erhalten. Dies erfolgt durch eine entsprechende Aufhängung an einem Hebezeug, einer Anordnung auf schwimmenden Auftriebskörpern oder einer sonstigen, an sich bekannten Befestigung am Behälter.

Um die Rotation der Einrichtung um die eigene Drehachse auszuschließen, sind Befestigungsmittel, beispielsweise ein Form von Drehmomentstützen oder vergleichbaren Elementen, vorgesehen. Deren Aufgabe ist das Auffangen eines Differenzdrehmomentes zwischen der Einrichtung und einem Behälterinhalt. Dies können Streben, Zugmittel oder sonstige bekannte Mittel sein, die eine Eigenrotation der Einrichtung gegenüber einem Behälter oder dessen Inhalt unterbinden. Bei einer schwimmenden Anordnung hat sich die Anordnung von in das Fluid eintauchenden und mit der Einrichtung verbundenen Drallelementen bewährt, mit deren Hilfe eine Eigenrotation der Einrichtung vermieden wird. Ebenso verhindern sie eine Drallbildung um das Rührelement herum, wodurch dessen Messergebnis nicht beeinflusst wird.

Nach einer weiteren Ausgestaltung ist zwischen Motor und Rührelement eine Messplattform angeordnet. Diese dient zur Befestigung von Auftriebskörpern, der Aufnahme von einem Tragelement für den Motor und/oder für das Rührelement, den Messeinrichtungen und der Auswerteeinheit, zur Leistung- und Schubmessung. Für Letzteres können mit Dehnungsmessstreifen ausgestattete Wellenteile oder in zwei Richtungen messende Messelemente Anwendung finden.

Zur Schubmessung ist ein Messmittel in Form eines Druckmesselements vorgesehen, beispielsweise in Form einer Druckdose. Es kann an einer Stellvorrichtung, am oder zwischen Rührelement und Motor, an einer Welle, an einer Wellenverbindung oder an der Einrichtung vorgesehen sein. Analog kann die Schubmessung des Rührelementstrahles auch am Motor des Rührelements abgenommen werden.

Zusätzlich ist vorgesehen, dass das Rührelement mit einer Stelleinrichtung in Richtung und Eintauchtiefe einstellbar ist. Somit ist in einfachster Weise eine Anpassung an unterschiedliche Behälter möglich. Mit Hilfe der Stelleinrichtung kann das Rührelement und/oder dessen antreibende Welle auch in eine Position gebracht werden, bei der in Abhängigkeit von einer Behältergröße und Anordnung die Strahlrichtung des Rührelementes in jede beliebige, messtechnisch reproduzierbare Richtung gelenkt werden kann.

Zur Vermeidung sich während einer Messung eventuell ausbildender und störender Schwallströmungen innerhalb des Behälters ist die Drehrichtung des Rührelementes umschaltbar. In Abhängigkeit von örtlichen Gegebenheiten können somit vom Rühreiement ausgehende Strömungen in Richtung Behälterboden oder Behälteroberfläche gerichtet sein. Dementsprechend sind auch die Schubmesseinrichtung und Drehmomenterfassung ausgelegt, um bei solchen Betriebszuständen für beide Drehrichtungen genaue Messergebnisse zu liefern.

In der Auswerteeinheit sind die Daten von früheren Vergleichsmessungen des Rührelementes mit bekannten Fluiden hinterlegt und die Auswerteinheit ermittelt daraus und in Verbindung mit aktuellen jeweiligen Messwerten eine Fließkurve eines unbekannten Fluid.

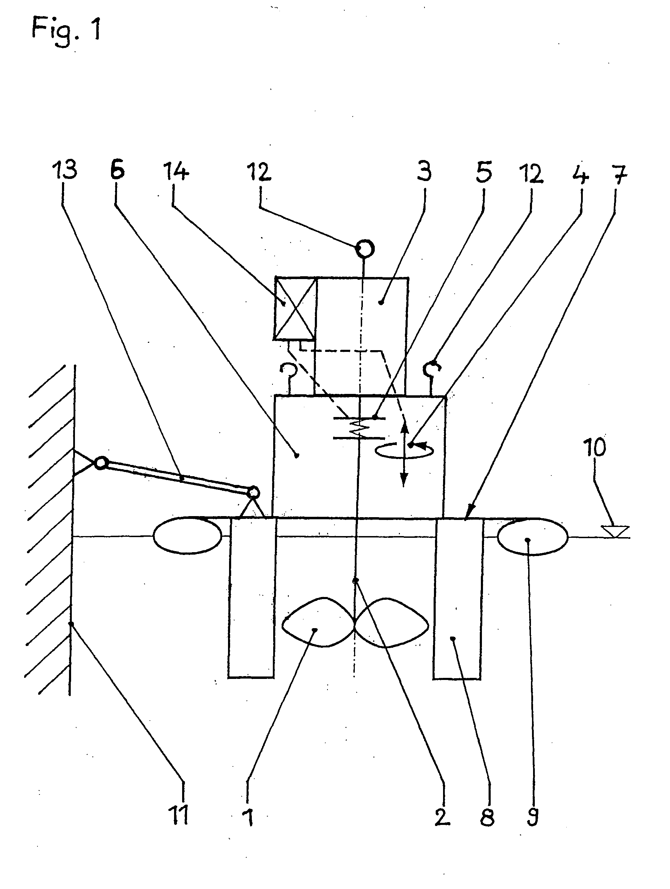

Ausführungsbeispiele sind in der Zeichnung dargestellt und werden im Folgenden beschrieben. Es zeigen die
- Fig. 1 - 4: Ansichten von Messeinrichtungen.

Die Fig. 1 zeigt eine Prinzipskizze einer Einrichtung zur Messung einer Fließkurve für nicht-newtonsche Fluide. Sie verfügt über ein axialförderndes Rührelement 1, welches über eine Welle 2 mit einem drehzahlgeregeltem Motor 3 verbunden ist. Eine erste Messeinrichtung 4 dient zur Drehzahl- und Drehmomenterfassung des vom Motor 3 angetriebenen Rührelementes 1. Die Wirkungsrichtung der ersten Messeinrichtung 4 ist mit dem ringförmigen Pfeilsymbol dargestellt.

Zur Schubmessung des Rührelementes 1 ist eine zweite Messeinrichtung 5 vorgesehen, die in der Fig. 1 als ein in die Welle integriertes Federelement eingezeichnet ist und dessen messtechnische Wirkungsrichtung durch einen Doppelpfeil dargestellt ist. Der Motor 3 ist über eine Lagereinheit 6 kräfteübertragend mit einer Messplattform 7 verbunden. Die Messplattform 7 wird von der Welle 2 durchdrungen und an der Messplattform 7 sind in ein zu messendes Fluid eintauchende Drallelemente 8 angeordnet, die das Rührelement 1 umgeben. An der Messplattform 7 sind weiterhin Auftriebskörper 9 angebracht, mit deren Hilfe die Einrichtung schwimmend auf der Oberfläche 10 des mit Fluid gefüllten Behälters 11 angebracht sein kann. Mit Hilfe von zusätzlich angebrachten Hebemitteln 12 und Befestigungsmitteln 13 kann die Einrichtung zu einem Messort transportiert und dort betriebssicher gehalten oder auch befestigt werden. Die erste und zweite Messeinrichtung 4, 5 sind mit einer Auswerteeinheit 14 verbunden, in der Vergleichswerte mit bekannten, nicht-newtonschen und newtonschen Fluiden hinterlegt sind. In der Auswerteeinheit 14 ist auch das maximale Drehmoment des Motors der Einrichtung hinterlegt.

Die Funktionsweise der Einrichtung beruht zunächst auf dem bekannten Prinzip nach RIEGER-NOVAK zur Bestimmung von newtonschen und nicht-newtonschen Fließcharakteristiken mit Hilfe eines verfahrenstechnischen Rührsystems, welches ein drehzahlgeregeltes Rührwerk in einem Standard-Rührbehälter umfasst. Bei der Einrichtung sind sowohl die Leistungscharakteristik als auch die METZNER-OTTO-Konstante des Rührelements bekannt.

Für eine genaue rheologische Betrachtung eines unbekannten nicht-newtonschen Fluids erfolgt am Ort des Fluids eine Messung zur Bestimmung der Leistungsaufnahme und eine Ableitung aus einem zusätzlich eingeführten Messparameter. Dazu wird ein axial förderndes Rührelement so im Behälter 11, der hier als ein Lager- oder Behandlungsbecken für das Fluid ausgebildet ist, positioniert, so dass sich der Propellerstrahl des Rührelementes möglichst frei ausbreiten kann. Durch die Bestimmung des Axialschubs des Propellers / Rührelements steht eine zusätzliche viskositätsabhängige Messgröße zur Verfügung.

Durch die Anordnung der Einrichtung direkt in einem Behälter 11 mit einem zu untersuchenden Fluid, wobei es sich um ein Klärwerksbecken, einen Biogasbehälter oder dergleichen handeln kann, ist nach Abschluss der Messungen nur noch eine einfache Reinigung der Einrichtung am Messort erforderlich. Dies ist eine entscheidende Verfahrensvereinfachung. Eine Rotation der Einrichtung um ihre Achse verhindern die Drallelemente, Befestigungsmittel 13 und/oder Drehmomentstützen und dergleichen.

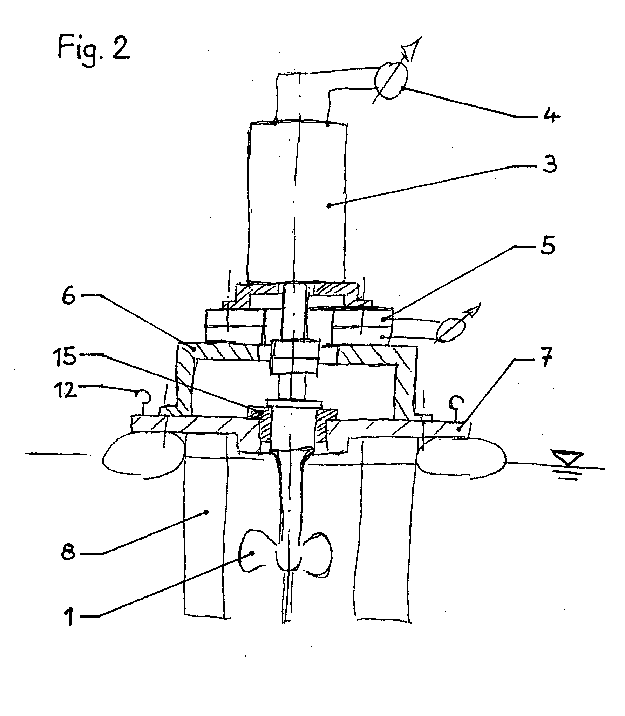

Fig. 2 zeigt eine Schnittdarstellung durch eine Einrichtung, bei der zwischen dem drehzahlgeregelten Motor 3, in den die erste Messeinrichtung 4 für Drehmoment- und Drehzahlerfassung integriert ist, unter Zwischenschaltung einer als Kraftmessdose oder als eine Waage ausgebildete zweite Messeinrichtung 5 an der Lagereinheit 6 befestigt ist.

Das Rührelement 1 ist in diesem Ausführungsbeispiel direkt in der Messplattform 7 in einem Lager15 angeordnet.

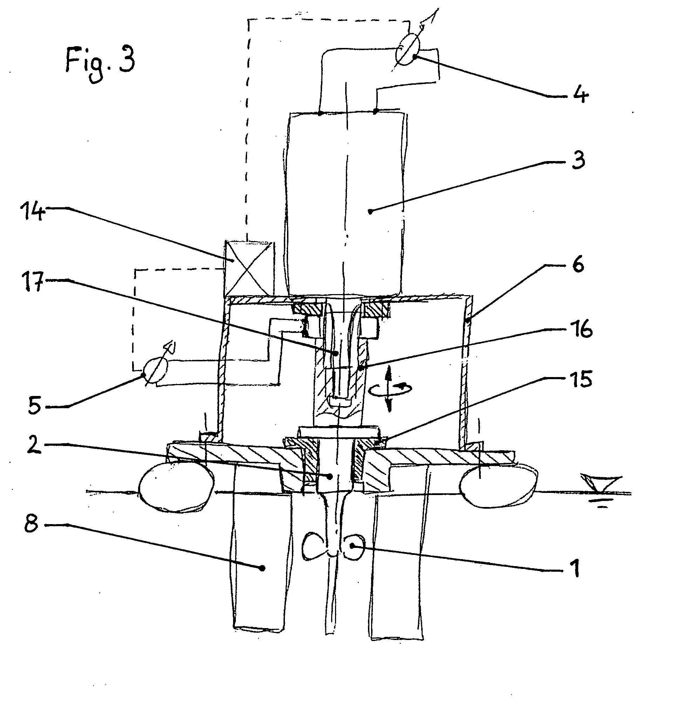

Die Fig. 3 zeigt eine Abwandlung der Fig. 2, wobei hier der Motor 3 direkt an der Lagereinheit 6 befestigt ist. Das Rührelement 1 ist mit seiner Welle 2 im Lager 15 dreh- und axialverschieblich angeordnet und mit einem Kupplungselement 16 axialverschieblich auf einem Wellenzapfen 17 des Motors 3 kräfteübertragend verbunden. Zwischen Motor 3 und Wellenzapfen 17 befindet sich die zweite Messeinrichtung 5 zur Erfassung des Axialschubes. Hierbei kann es sich um ein in axialer Richtung verformbares Element handeln, welches ein Messsignal an eine Auswerteeinheit 14 übermittelt.

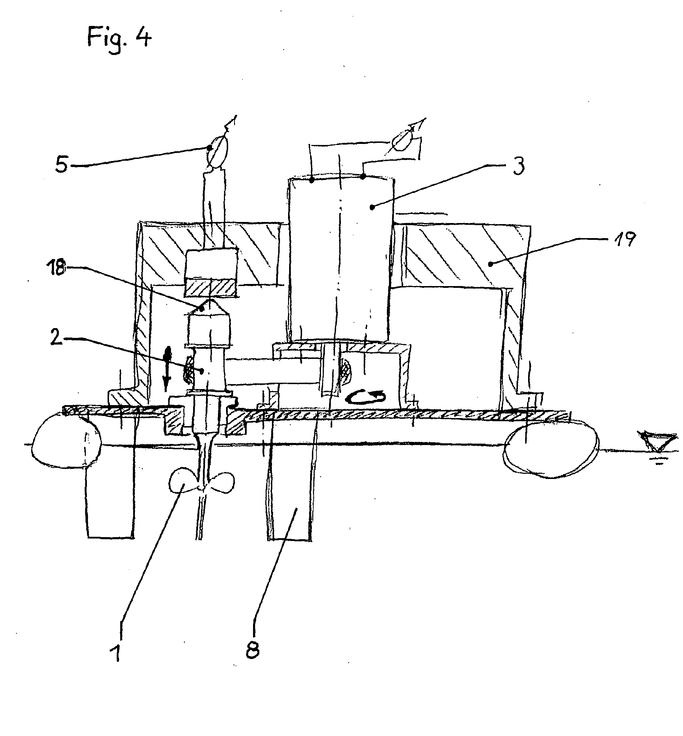

Die Fig. 4 zeigt eine konstruktive Abwandlung der Einrichtung, welche eine geringere Bauhöhe aufweist. Zu diesem Zweck ist der drehzahlgeregelte Motor 3 neben der Welle 2 des Rührelements 1 angeordnet. Mittels bekannter Getriebeelemente, Riemen, Zahnräder und dergleichen, erfolgt eine Drehmomentübertragung auf die Welle 2. Die Welle 2 stützt sich mit ihrem Wellenende 18 direkt an der zweiten Messeinrichtung 5 ab und überträgt somit den vom Rührelement 1 erzeugten Axialschub. Die Kraftübertragung zwischen Motor 1 und Welle 2 ist so ausgelegt, dass keine negative Beeinflussung eines Axialschubes eintritt. Ein Schutzgehäuse 19 hüllt die Bauteile ein.

### Liste der Bezugszeichen

- 1: Rührelement
- 2: Welle
- 3: Motor
- 4: erste Messeinrichtung
- 5: zweite Messeinrichtung
- 6: Lagereinheit
- 7: Messplattform
- 8: Drallelement
- 9: Auftriebskörper
- 10: Oberfläche
- 11: Behälter
- 12: Hebemittel
- 13: Befestigungsmittel
- 14: Auswerteeinheit
- 15: Lager
- 16: Kupplungselement / Wellenverbindung
- 17: Wellenzapfen
- 18: Wellenende
- 19: Schutzgehäuse

## Patentansprüche

1. Einrichtung zu einer rheologischen Messung eines Fluids, bestehend aus einem von einem Motor angetriebenes Rührelement, dessen Motor mit einer Leistungsmesseinrichtung verbunden ist, wobei die Einrichtung in Behälter zur Aufnahme zu untersuchender Fluide angeordnet ist, **dadurch gekennzeichnet, dass** das Rührelement (1) als ein axialfördernder Propeller- oder Schrägblattrührer mit bekannten Eigenschaften ausgebildet und mit einem drehzahlgeregelten Motor (3) antreibend verbunden ist, dass der Motor (3) und/oder das Rührelement (1) mit einer 1. Messeinrichtung (4) für Drehzahl-, Drehmomenterfassung und mit einer 2. Messeinrichtung (5) zur Schubmessung verbunden sind und dass die Messeinrichtungen (4, 5) mit einer die Messergebnisse in eine Fließkurve oder entsprechende rheologische Werte umwandelnde Auswerteeinheit (14) verbunden sind.

2. Einrichtung nach Anspruch 1, **dadurch gekennzeichnet, dass** die Einrichtung als eine transportable Einheit ausgestaltet ist.

3. Einrichtung nach Anspruch 2, **dadurch gekennzeichnet**, die Einrichtung mit Auftriebskörpern (9) schwimmfähig ausgebildet ist.

4. Einrichtung nach Anspruch 2, **dadurch gekennzeichnet, dass** Hebe- (12) und/oder Befestigungsmittel (13) die Einrichtung in einer Messposition halten.

5. Einrichtung nach einem der Ansprüche 1 bis 4, **dadurch gekennzeichnet, dass** mit Befestigungsmitteln (13) eine Verdrehsicherung gegenüber dem Behälter (11) erfolgt.

6. Einrichtung nach einem der Ansprüche 1 bis 5, **dadurch gekennzeichnet, dass** im Bereich des Rührelementes (1) ein oder mehrere Drallelemente (8) angeordnet sind.

7. Einrichtung nach einem der Ansprüche 1 bis 6, **dadurch gekennzeichnet, dass** zwischen Motor (3) und Rührelement (1) eine Messplattform (7) angeordnet ist.

8. Einrichtung nach einem der Ansprüche 1 bis 7, **dadurch gekennzeichnet, dass** das Schubmessmittel (5) an einer Stellvorrichtung, am oder zwischen Rührelement (1) und Motor (3), an einer Welle (2), einer Wellenverbindung (16), an der Einrichtung oder am Motor (3) vorgesehen ist.

9. Einrichtung nach einem oder mehreren der Ansprüche 1 bis 8, **dadurch gekennzeichnet, dass** das Rührelement (1) mit einer Stelleinrichtung in Richtung und Eintauchtiefe einstellbar ist.

10. Einrichtung nach einem oder mehreren der Ansprüche 1 bis 9, **dadurch gekennzeichnet, dass** die Drehrichtung des Rührelementes (1) umschaltbar ist und/oder dass die Messeinrichtungen (4, 5) drehrichtungsunabhängig arbeiten.

11. Einrichtung nach einem oder mehreren der Ansprüche 1 bis 10, **dadurch gekennzeichnet, dass** in der Auswerteeinheit (14) die Daten von früheren Vergleichsmessungen des Rührelementes (1) mit bekannten Fluiden hinterlegt sind und dass die Auswerteinheit (14) daraus und in Verbindung mit aktuellen jeweiligen Messwerten eine Fließkurve eines unbekannten Fluid ermittelt.

12. Verfahren zur rheologischen Messung in einem Behälter (11) mit darin angeordneten, von einem drehzahlgeregelten Motor (3) angetriebenen Rührelement (1), **dadurch gekennzeichnet, dass** die Leistungs- und Schubkurve der Einrichtung mit newtonschem Fluid mit mehreren aber konstanten Viskositäten µ₁, µ₂ und µ₃ bis µₓ erfolgt, dass eine Leistungs- und Schubmessung eines bekanntes, aber nicht-newtonschen Fluid erfolgt, dass durch einen Vergleich vorgenannter Messungen der Zusammenhang aus Drehzahl und Scherrate ermittelt und in einer Auswerteeinheit (14) hinterlegt wird, dass in Abhängigkeit von der wirksamen Reynolds-Zahl, definiert durch den Durchmesser des Rührelements (1), dessen Drehzahl, der Viskosität und Dichte eines Fluids, mit einer Drehmoment- und Drehzahlmessung eine Leistungsmessung sowie eine Schubmessung am zu messenden Fluid erfolgt, und dass die Auswerteeinheit (14) aus einem Vergleich der Messwerte von einem unbekannten, nicht-newtonschen Fluid mit den hinterlegten Vergleichswerten eine Fließkurve des unbekannten Fluids bestimmt.
